# EUROPÄISCHE PATENTSCHRIFT

(11) **EP 4 155 530 B1**
(45) Veröffentlichungstag und Bekanntmachung des Hinweises auf die Patenterteilung: **15.05.2024**
(21) Anmeldenummer: 21198438.0
(22) Anmeldetag: 23.09.2021
(51) Int. Cl.: F03D 1/06

(54) **WINDENERGIEANLAGEN-ROTORBLATT**
WIND TURBINE ROTOR BLADE
PALE DE ROTOR POUR ÉOLIENNE

(43) Veröffentlichungstag der Anmeldung: 29.03.2023
(73) Patentinhaber: Wobben Properties GmbH, 26607 Aurich (DE)
(72) Erfinder: BÖRCHERS, Rasmus, 28211 Bremen (DE); CIAPANNA, Renato, 40217 Düsseldorf (DE)
(74) Vertreter: Eisenführ Speiser

(56) Entgegenhaltungen:
- EP-A1- 3 129 644
- EP-A1- 3 581 790
- EP-B1- 3 129 644
- WO-A1-2020/119874
- CN-A- 102 878 183
- CN-A- 105 464 898

## Beschreibung

Die vorliegende Erfindung betrifft ein Windenergieanlagen-Rotorblatt und ein Verfahren zur Montage eines Windenergieanlagen-Rotorblattes.

Da die Länge der modernen Rotorblätter von Windenergieanlagen immer größer wird, ist teilweise dazu übergegangen worden, Rotorblätter in Längsrichtung zu teilen, so dass ein Rotorblatt aus mindestens zwei Rotorblattteilen besteht, welche später zusammenmontiert werden können. Da die Rotorblätter einer Windenergieanlage bei Betrieb sehr hohen statischen und dynamischen Belastungen ausgesetzt sind, muss auch die Verbindungsstelle zwischen zwei Rotorblattteilen entsprechend ausgestaltet sein.

EP 1 815 137 zeigt ein Rotorblatt einer Windenergieanlage, welches in Längsrichtung geteilt ist, so dass ein erster und zweiter Rotorblattabschnitt vorgesehen ist. Zwischen dem ersten und zweiten Abschnitt ist ein Verbindungsstück mit einem ersten und zweiten Flansch jeweils zur Kopplung mit dem ersten und zweiten Teil vorgesehen. Die beiden Rotorblattabschnitte werden somit an entgegengesetzten Enden des Verbindungsstückes mittels Schrauben und Muttern befestigt.

EP 2 708 735 B1 zeigt ein längsgeteiltes Windenergieanlagen-Rotorblatt mit einem Zwischenteil, das zwei querlaufende Endtrennwände aufweist. Mittels Bolzen und Schrauben werden die Teile der Rotorblätter an dem Zwischenteil befestigt. Beispiele für Lösungen aus dem Stand der Technik sind auch in den Dokumenten CN102878183 und CN105464898A zu finden.

Es ist eine Aufgabe der vorliegenden Erfindung, ein mehrteiliges Windenergieanlagen-Rotorblatt mit einer verbesserten Befestigungsmöglichkeit zwischen den Abschnitten des Rotorblattes vorzusehen.

Diese Aufgabe wird durch ein Windenergieanlagen-Rotorblatt nach Anspruch 1 gelöst.

Somit wird ein Windenergieanlagen-Rotorblatt mit einer Längsrichtung, mindestens einem ersten Rotorblattabschnitt mit einer ersten Stirnseite und einem zweiten Rotorblattabschnitt mit einer zweiten Stirnseite und einer Trennstelle zwischen dem ersten und zweiten Rotorblattabschnitt vorgesehen. Die erste und zweite Stirnseite liegen an der Trennstelle aneinander an. Die erste Stirnseite weist eine Mehrzahl von ersten Ausnehmungen und die zweite Stirnseite eine Mehrzahl von zweiten Ausnehmungen auf. Ferner ist eine Befestigungseinheit vorgesehen, welche dazu ausgestaltet ist, den ersten und zweiten Rotorblattabschnitt an der Trennstelle aneinander zu befestigen. Die Befestigungseinheit weist eine Mehrzahl von ersten Einsätzen aus Metall auf, welche in den ersten Ausnehmungen angeordnet sind und eine Mehrzahl von zweiten Einsätzen aus Metall auf, welche in den zweiten Ausnehmungen angeordnet sind. Die ersten Einsätze weisen jeweils ein erstes Ende und ein zweites Ende auf. Die zweiten Einsätze weisen jeweils ein erstes Ende und ein zweites Ende auf. Die ersten Enden der ersten und zweiten Einsätze sind jeweils an der Trennstelle angeordnet. Die Befestigungseinheit weist eine Mehrzahl von Spanneinheiten auf, welche dazu geeignet sind, erste und zweite Einsätze gegeneinander zu verspannen, wobei die jeweiligen ersten Enden der ersten und zweiten Einsätze im verspannten Zustand aneinander anliegen und gegeneinander verspannt sind.

Gemäß einem Aspekt der Erfindung wird ein Windenergieanlagen-Rotorblatt mit mindestens einem ersten und zweiten Abschnitt sowie mindestens einer Befestigungseinheit an einer Trennstelle zwischen dem mindestens einen ersten und zweiten Abschnitt vorgesehen. Das Rotorblatt kann im Wesentlichen aus Laminat mit einem glasfaser- oder kohlenstofffaserverstärkten Kunststoff hergestellt sein. Der erste Abschnitt des Rotorblattes weist eine erste Befestigungsschnittstelle an einer ersten Stirnseite des ersten Abschnitts auf. Der zweite Abschnitt des Rotorblattes weist eine zweite Befestigungsschnittstelle an einer zweiten Stirnseite des zweiten Abschnitts auf. Die erste und zweite Befestigungsschnittstelle können miteinander gekoppelt werden und können die Trennstelle ausbilden. Im Bereich der Befestigungsschnittstelle weist das Rotorblatt ein Laminat z. B. mit glasfaserverstärktem Kunststoff oder kohlenstofffaserverstärktem Kunststoff auf. Der erste und zweite Rotorblattabschnitt weist einen ersten und zweiten Einsatz jeweils mit einem ersten und zweiten Ende auf. Die zweiten Enden des ersten und zweiten Einsatzes befinden sich in dem Laminat des Rotorblattes. Die ersten Enden sind im Bereich der Trennstelle zwischen dem ersten und zweiten Abschnitt des Rotorblattes vorgesehen, so dass sie aufeinander bzw. aneinander anliegen, wenn das erste und zweite Rotorblattteil aneinander mittels der Befestigungseinheit befestigt und vorgespannt werden.

Gemäß einem Aspekt der vorliegenden Erfindung kann eine Verspannung mittels der Spanneinheit beispielsweise unter Verwendung einer Stange und einer Mutter erreicht werden, wobei ein Ende der Stange in dem ersten oder zweiten Einsatz vorgesehen ist und das zweite Ende der Stange mittels einer Mutter in oder an dem zweiten oder ersten Einsatz gekoppelt ist, so dass mittels der Spanneinheit (der Gewindestange und der Schraube) die beiden Teile des Rotorblattes miteinander bzw. aneinander befestigt werden können. Optional kann die Spanneinheit (z. B. die Stange) an beiden Enden mit Muttern an den ersten und zweiten Einsatz gekoppelt werden.

Gemäß einem Aspekt der vorliegenden Erfindung ist der erste und zweite Einsatz aus Metall. Die erfindungsgemäße Verbindung zwischen dem ersten und zweiten Rotorblattteil mittels der Befestigungseinheit ist vorteilhaft, weil die jeweiligen ersten Enden der Einsätze aus Metall sind, so dass die Schnittstelle zwischen dem ersten und zweiten Rotorblattteil eine Metallschnittstelle (Metall-auf-Metall) darstellen kann. Diese Schnittstelle kann bei der Montage entsprechend vorgespannt werden. Anschließend kann optional auf eine Wartung dieser Schnittstelle verzichtet werden. Eine derartige Schnittstelle kann also wartungsfrei ausgelegt werden.

Im Stand der Technik weisen die Trennstellen zwischen den beiden Rotorblattabschnitten zumindest teilweise eine Schnittstelle zwischen dem Laminat und einem Metallflansch auf. Dies kann zu einer Beeinträchtigung der Befestigung zwischen dem ersten und zweiten Rotorblattteil führen, so dass diese Verbindung nachgespannt werden muss. Dies wird erfindungsgemäß vermieden, indem die Schnittstelle zwischen dem ersten und zweiten Rotorblattteil eine Schnittstelle Metall-auf-Metall darstellen kann.

Gemäß einem Aspekt der vorliegenden Erfindung weist der erste und zweite Einsatz jeweils eine Ausnehmung z. B. in Form einer zumindest teilweise durchgehenden Bohrung auf. Optional kann in einem ersten Einsatz ein Gewinde oder ein Gewindeeinsatz vorgesehen sein. Optional kann an dem ersten und/oder zweiten Einsatz eine durchgehende Bohrung vorgesehen sein, durch welche eine Spanneinheit z. B. in Form einer Stange oder eines Bolzens geführt werden kann. Optional kann die Spanneinheit mittels einer Mutter vorgespannt werden. Optional kann die Stange an beiden Enden mit Muttern an den ersten und zweiten Einsatz gekoppelt werden.

Gemäß einem Aspekt der vorliegenden Erfindung kann im Bereich des zweiten Rotorblattteils (welches einen äußeren Teil des Rotorblatts darstellen kann) eine Ausnehmung z. B. in Form einer Bohrung für jeden ersten Einsatz vorgesehen sein. Vorzugsweise ist eine Mehrzahl von ersten Einsätzen vorgesehen, welche sich entlang des Umfangs der Rotorblattteile erstrecken. In dem zweiten Rotorblattteil (beispielsweise ein Rotorblattinnenteil) ist ebenfalls eine Mehrzahl von Ausnehmungen oder Bohrungen jeweils zur Aufnahme eines zweiten Einsatzes vorgesehen.

Die erfindungsgemäße Verbindung zwischen zwei Rotorblattabschnitten erlaubt eine kostengünstige und wartungsärmere Verbindungslösung. Durch geteilte Rotorblätter können Transportkosten gesenkt werden. Ferner ist es dann auch möglich, Rotorblätter zu schwer zugänglichen Standorten zu transportieren. Ferner kann die erfindungsgemäße Verbindungslösung eine Erhöhung der zulässigen mechanischen Belastung erlauben. Insbesondere kann mit der erfindungsgemäßen Verbindungslösung eine wartungsfreie Verbindung zwischen zwei Rotorblattabschnitten erreicht werden. Damit könnte auch ein mehrteiliges Rotorblatt erreicht werden, welches eine Trennstelle im Bereich des äußeren Blattabschnitts aufweist. Dies wäre bei einer nichtwartungsfreien Verbindungslösung nicht möglich, da eine derartige Verbindungsstelle nicht zugänglich wäre.

Eine Vorspannung der Spanneinheiten (beispielsweise Bolzen oder Gewindebolzen) kann durch einen hydraulischen Kolben oder Stempel erreicht werden. Beispielsweise kann dieser Stempel in die Langlöcher des ersten Rotorblattabschnitts eingeführt werden.

Gemäß einem Aspekt der vorliegenden Erfindung können die ersten und zweiten Einsätze einreihig oder doppelreihig (im Querschnitt umlaufend) an den zweiten Enden der Rotorblattabschnitte vorgesehen sein.

In dem ersten und/oder zweiten Rotorblattabschnitt, insbesondere im Bereich der ersten und zweiten Stirnseite, können mehrere Langlöcher vorgesehen sein. Die Langlöcher dienen dazu, damit die Befestigungseinheiten verspannt oder vorgespannt werden können. Optional können die Langlöcher wechselseitig in dem ersten und zweiten Rotorblattabschnitt vorgesehen sein. Dies ist vorteilhaft, da die Langlöcher damit mit geringerem Abstand zueinander angeordnet werden können. Damit steigt auch die mittels der Trennstelle übertragbare Last. Dies kann dazu führen, dass das Gewicht der Trennstelle reduziert werden kann.

Mit der erfindungsgemäßen Verbindungslösung kann das Gewicht des Rotorblattes insbesondere im Bereich der Trennstelle reduziert werden.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß einem Ausführungsbeispiel der Erfindung,
- Fig. 2: zeigt einen schematischen Querschnitt einer Trennstelle zwischen einem ersten und zweiten Rotorblattteil,
- Fig. 3: zeigt einen weiteren Querschnitt einer Trennstelle zwischen zwei Rotorblattteilen,
- Fig. 4: zeigt eine schematische Schnittansicht eines Rotorblattteils im Bereich der Trennstelle,
- Fig. 5: zeigt eine schematische Schnittansicht eines Windenergieanlagen-Rotorblattes im Bereich der Trennstelle, und
- Fig. 6: zeigt eine schematische Schnittansicht eines Windenergieanlagen-Rotorblattes im Bereich einer Trennstelle.

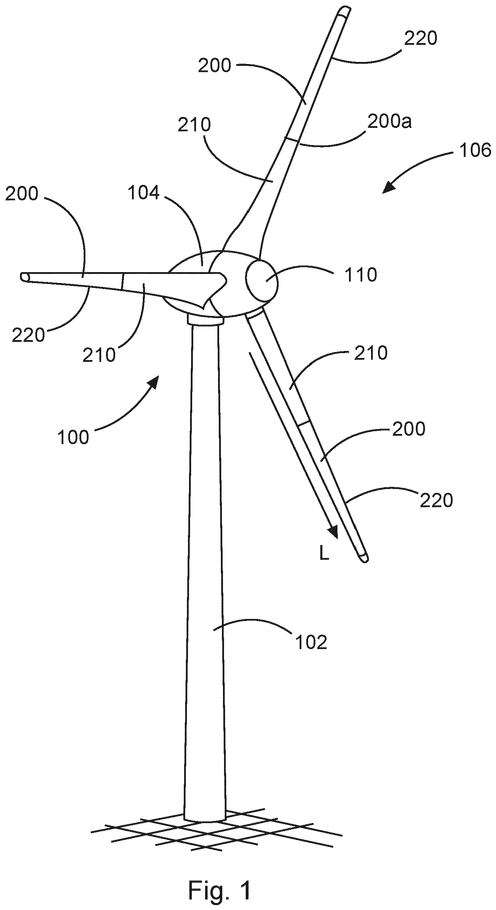

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden. Die Rotorblätter 200 weisen jeweils eine Längsrichtung L auf.

Die Rotorblätter 200 sind gemäß einem ersten Ausführungsbeispiel zumindest in Längsrichtung L zumindest zweiteilig ausgestaltet, so dass sie jeweils einen ersten und zweiten Rotorblattabschnitt 210, 220 mit einer Trennstelle 200a dazwischen aufweisen. Der erste Rotorblattabschnitt 210 stellt einen inneren Rotorblattabschnitt dar und weist an seinem ersten Ende eine Rotorblattwurzel und an seinem zweiten Ende eine Stirnseite auf. Der zweite Rotorblattabschnitt 220 weist an seinem ersten Ende eine Rotorblattspitze und an seinem zweiten Ende eine Stirnseite auf. Der erste und zweite Rotorblattabschnitt 210, 220 können an der Trennstelle 200a miteinander gekoppelt bzw. verbunden werden.

Die Rotorblätter 200 können beispielsweise aus zwei Halbschalen zusammengesetzt werden. Die Rotorblätter 200 können eine Hülle aus einem Laminat sowie optional Verstärkungs- oder Versteifungsstege zwischen der ersten und zweiten Halbschale aufweisen. Die Rotorblätter 200 können somit beispielsweise hohl ausgestaltet sein. Je nach Größe des Rotorblattes kann es möglich sein, dass Wartungspersonal sich in das Innere des Rotorblattes begibt, um eine Trennstelle bzw. Verbindungsstelle zwischen zwei Rotorblattabschnitten zu überprüfen.

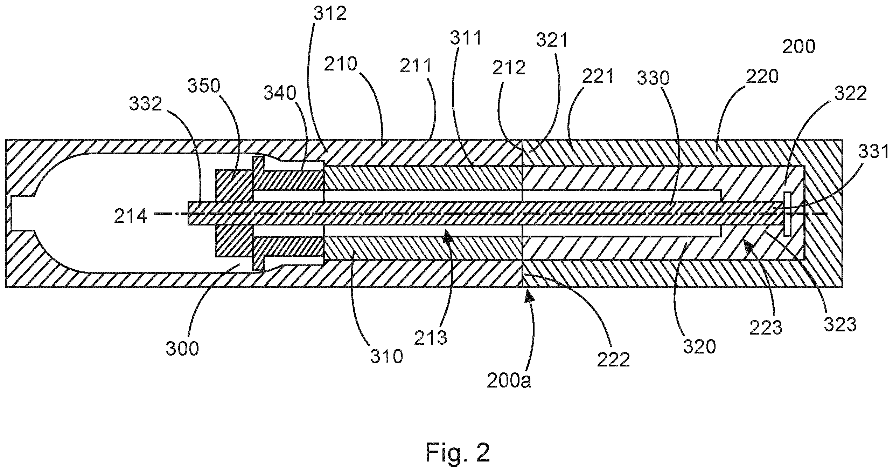

Fig. 2 zeigt einen schematischen Querschnitt einer Trennstelle zwischen einem ersten und zweiten Rotorblattteil. In Fig. 2 ist insbesondere die Schnittstelle bzw. Trennstelle 200a zwischen dem ersten und zweiten Rotorblattabschnitt 210, 220 gezeigt. Der erste und zweite Rotorblattabschnitt 210, 220 weisen ein erstes und zweites Laminat 211, 221 auf, das typisch für Rotorblätter einer Windenergieanlage ist. Dieses erste und zweite Laminate 211, 221 können beispielsweise glasfaserverstärkter Kunststoff oder kohlenstofffaserverstärkter Kunststoff darstellen. Der erste Rotorblattabschnitt 210 weist eine erste Stirnseite 212 auf. Der zweite Rotorblattabschnitt 220 weist eine zweite Stirnseite 222 auf. Die erste und zweite Stirnseite 212, 222 liegen an der Trennstelle 200a aneinander an. Somit bilden die erste und zweite Stirnseite eine Schnittstelle zwischen den Rotorblattabschnitten. Der erste und zweite Rotorblattabschnitt 210, 220 weisen jeweils eine Mehrzahl von ersten bzw. zweiten Ausnehmungen oder Bohrungen 213, 223 auf. Diese ersten bzw. zweiten Ausnehmungen oder Bohrungen 213, 223 können entlang des Umfangs des ersten und zweiten Rotorblattabschnitts 210, 220 angeordnet sein. In dem ersten Rotorblattabschnitt 210 kann zusätzlich dazu eine Mehrzahl von Ausnehmungen in Form von z.B. ersten Langlöchern 214 vorgesehen sein, welches mit zumindest einer der Ausnehmungen 213 gekoppelt ist. Alternativ dazu kann das Langloch 214 auch in dem zweiten Rotorblattabschnitt 220 vorgesehen sein. Gemäß einem weiteren Aspekt der Erfindung können Langlöcher wechselseitig in dem ersten und zweiten Rotorblattabschnitt vorgesehen sein. In Umfangsrichtung kann damit abwechselnd ein Langloch in dem ersten Rotorblattabschnitt 210 und ein Langloch 214 in dem zweiten Rotorblattabschnitt 220 vorgesehen sein.

Eine Befestigungseinheit 300 ist vorgesehen, um den ersten und zweiten Rotorblattabschnitt 210, 220 miteinander oder aneinander zu befestigen. Die Befestigungseinheit 300 weist erste und zweite Einsätze 310, 320 auf.

In die Ausnehmungen oder Bohrungen 223 des zweiten Rotorblattteils 220 werden die zweiten Einsätze 320 platziert. In den Ausnehmungen oder Bohrungen 213 in dem ersten Rotorblattteil 210 werden die ersten Einsätze 310 platziert. Die Einsätze 310, 320 sind jeweils aus Metall gefertigt.

Die Befestigungseinheit 300 weist erste Einsätze 310 in den Ausnehmungen oder Bohrungen 213 des ersten Rotorblattabschnitts 210 sowie zweite Einsätze 320 in den Ausnehmungen oder Bohrungen 223 des zweiten Rotorblattabschnitts 220 auf. Des Weiteren ist eine Spanneinheit z. B. in Form von Bolzen, Stangen oder Gewindestangen 330 für die Befestigungseinheit 300 vorgesehen, welche erste und zweite Einsätze 310, 320 miteinander bzw. gegeneinander verspannen kann. Hierbei kann der Bolzen 330 an seinem ersten Ende 331 in einem ersten Gewinde 323 befestigt sein, welches im Bereich des zweiten Einsatzes 320 vorgesehen ist, welcher abgewandt zur Stirnfläche ist. Ein zweites Ende 332 kann beispielsweise mittels einer Mutter 350 an einem ersten Einsatz 310 befestigt sein. Optional kann ein Adapter 340 zwischen der Mutter 350 und den ersten Einsätzen 310 vorgesehen sein. Gemäß einem Aspekt der Erfindung kann die Befestigungseinheit 300 auch spiegelverkehrt in dem ersten und zweiten Rotorblattabschnitt 210, 220 vorgesehen sein.

Die ersten Einsätze 310 weisen ein erstes und zweites Ende 311, 312 auf. Die zweiten Einsätze 320 weisen jeweils ein erstes und ein zweites Ende 321, 322 auf. Die jeweiligen ersten Enden 311, 321 der ersten und zweiten Einsätze 310, 320 liegen an der Trennstelle 200a aneinander an.

Während die zweiten Ausnehmungen oder Bohrungen 223 Sackbohrungen darstellen können, können die ersten Ausnehmungen oder Bohrungen 213 in eine Ausnehmung in Form z.B. eines Langloches 214 münden. Die Längsrichtung des Langlochs 214 erstreckt sich in axialer Richtung und die Bohrung in radialer Richtung. Im zusammengesetzten Zustand liegen die ersten Enden 311, 321 der ersten und zweiten Einsätze 310, 320 aneinander an und können mittels der Spanneinheit verspannt werden, so dass eine Metall-auf-Metall Schnittstelle vorhanden sein kann. Die Bohrungen 324 können als Sackbohrungen oder als Durchgangsbohrungen (mit einer Mutter auf der Rückseite) ausgestaltet sein.

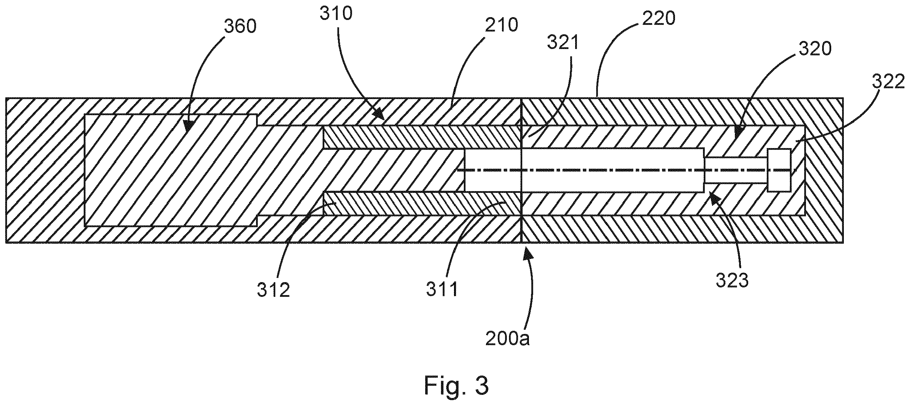

Fig. 3 zeigt einen weiteren Querschnitt einer Trennstelle zwischen zwei Rotorblattteilen. Der Aufbau von Fig. 3 entspricht im Wesentlichen dem Aufbau von Fig. 2. Somit weist ein Rotorblatt 200 einen ersten und einen zweiten Rotorblattabschnitt 210, 220 auf. In dem ersten Rotorblattabschnitt 210 ist eine Mehrzahl von ersten Bohrungen 213 und in dem zweiten Rotorblattabschnitt 220 ist eine Mehrzahl von zweiten Bohrungen 223 vorgesehen. In den ersten Bohrungen 213 sind erste Einsätze 310 und in den zweiten Bohrungen 223 sind zweite Einsätze 320 vorgesehen. Der zweite Einsatz 320 gemäß Fig. 3 entspricht im Wesentlichen dem zweiten Einsatz 320 von Fig. 2. Lediglich das Gewinde 323 ist an einer anderen Position befestigt.

Der Aufbau der ersten Einsätze 310 gemäß Fig. 3 entspricht im Wesentlichen dem Aufbau der ersten Einsätze 310 gemäß Fig. 2.

Zusätzlich dazu kann ein Einsatz aus z.B. Silikon 360 vorgesehen sein, welcher beispielsweise dazu dienen kann, das Langloch 214 und oder die Bohrung 213 während der Fertigung zu verschließen. Alternativ dazu oder zusätzlich dazu kann ein Einsatz aus z.B. Silikon auch zum Verschließen der zweiten Ausnehmung 223 und/oder der zweiten Langlöcher 314 verwendet werden.

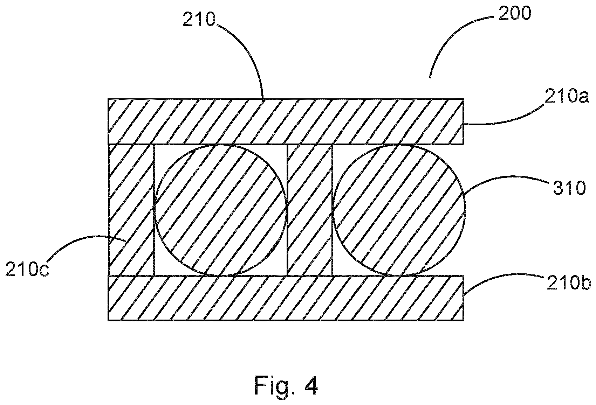

Fig. 4 zeigt eine schematische Schnittansicht eines Rotorblattteils im Bereich der Schnittstelle. Gemäß dem Ausführungsbeispiel von Fig. 4 muss keine Bohrung in dem Material des Rotorblattteils erfolgen. Vielmehr können die Einsätze 310 und 320 während des Fertigungsprozesses des Rotorblattes 200 mitverarbeitet werden. Hierbei geht es darum, Ausnehmungen für die Einsätze vorzusehen. Hierzu kann ein inneres Laminat 210b, ein äußeres Laminat 210a sowie mehrere Stege 210c vorgesehen sein. Die Einsätze können dann zwischen dem inneren und äußeren Laminat 210b, 210a sowie zwischen den jeweiligen Stegen 210c vorgesehen sein.

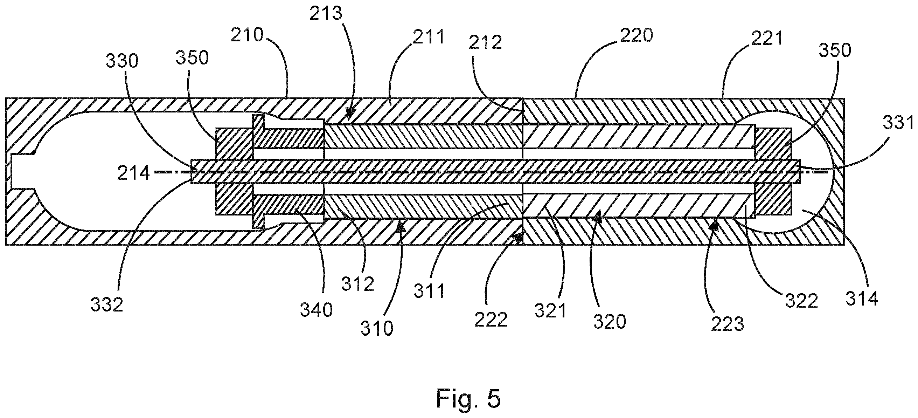

Fig. 5 zeigt eine schematische Schnittansicht einer Trennstelle eines Windenergieanlagen-Rotorblattes gemäß der Erfindung. Im Bereich der Trennstelle 200a ist ein erster und zweite Rotorblattabschnitt 210, 220 vorgesehen. Der erste und zweite Rotorblattabschnitt 210, 220 weisen jeweils eine erste und eine zweite Stirnseite 212, 222 auf, welche im Bereich der Trennstelle 200a aneinander anliegen. Im Bereich der ersten und zweiten Stirnseite 212, 222 sind erste und zweite Ausnehmungen 213, 223 vorgesehen. In diese ersten und zweiten Ausnehmungen 213, 223 werden die ersten und zweiten Einsätze 310, 320 platziert. Diese Einsätze 310, 320 sind vorzugsweise aus Metall. Die ersten und zweiten Einsätze 310, 320 zusammen mit einer Spanneinheit 330 bilden eine Befestigungseinheit 300 zum Befestigen des ersten und zweiten Rotorblattabschnittes 210, 220 aneinander im Bereich der Trennstelle 200a. Der erste und zweite Rotorblattabschnitt 210, 220 weisen mindestens eine erste oder zweite Ausnehmung (z. B. ein Langloch) 214, 314 auf. Die ersten oder zweiten Langlöcher oder Ausnehmungen 214, 314 dienen dazu, eine Anzahl von Muttern 350 auf einer Spanneinheit 330 beispielsweise in Form einer Gewindestange zu befestigen, um damit den ersten und zweiten Einsatz 310, 320 gegen- bzw. miteinander zu befestigen.

Während in dem Ausführungsbeispiel von Fig. 2 lediglich ein erstes Langloch 214 im Bereich des ersten Rotorblattabschnitts 210 vorgesehen ist, ist in dem Ausführungsbeispiel von Fig. 5 zusätzlich dazu mindestens ein zweites Langloch / Ausnehmung 314 im Bereich des zweiten Rotorblattabschnitts 220 vorgesehen. Die ersten und zweiten Langlöcher/Ausnehmungen 214, 314 können dazu dienen, die Muttern 350 zu verschrauben.

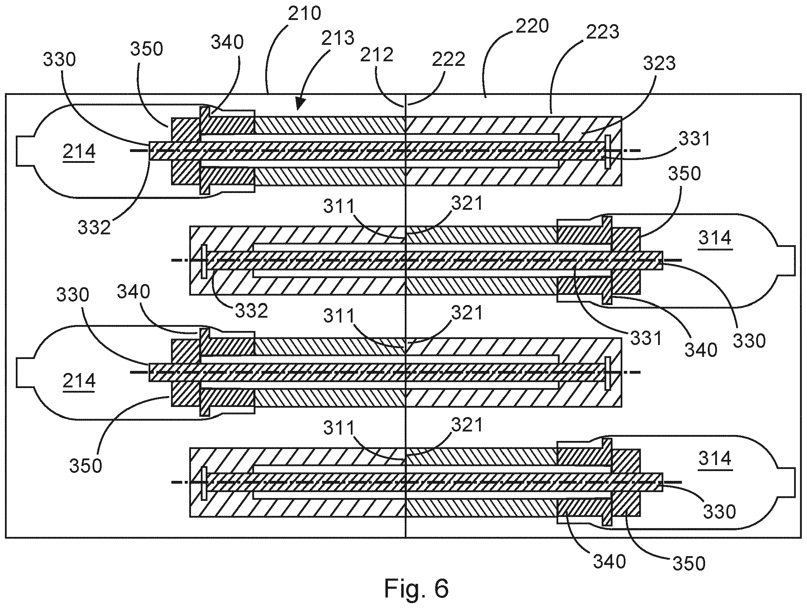

Fig. 6 zeigt eine schematische Schnittansicht einer Trennstelle eines Windenergieanlagen-Rotorblattes gemäß der Erfindung. Während in dem Ausführungsbeispiel von Fig. 2 lediglich ein Langloch in dem ersten Rotorblattabschnitt 210 und in dem Ausführungsbeispiel von Fig. 5 erste und zweite Langlöcher / Ausnehmungen 214, 314 sowohl in dem ersten als auch in dem zweiten Rotorblattabschnitt 210, 220 vorgesehen sind, sind die Langlöcher/Ausnehmungen 214, 314 in dem Ausführungsbeispiel von Fig. 6 abwechselnd (in Umfangsrichtung) in dem ersten und zweiten Rotorblattabschnitt 210, 220 angeordnet. Hierbei kann die Anordnung aus Fig. 2 und 3 mit Mutter 350 und Gewinde 323 oder die Anordnung aus Fig. 5 mit Muttern an beiden Enden der Spanneinheit 330 verwendet werden. Alternativ können auch Kombinationen aus den Anordnungen Fig. 2 oder 3 und Fig. 5 verwendet werden.

### Bezugszeichenliste

- 100: Windenergieanlage
- 102: Turm
- 104: Gondel
- 106: Rotor
- 110: Spinner
- 200: Rotorblatt
- 200a: Rotorblatt-Trennstelle
- 210: erster Rotorblattabschnitt
- 210a: äußeres Laminat 210
- 210b: inneres Laminat 210
- 210c: Stege 210
- 211: erstes Laminat
- 212: erste Stirnseite
- 213: erste Ausnehmung
- 214: erstes Langloch
- 220: zweiter Rotorblattabschnitt
- 221: zweites Laminat
- 222: zweite Stirnseite
- 223: zweite Ausnehmung
- 300: Befestigungseinheit
- 310: erster Einsatz
- 311: erstes Ende 310
- 312: zweites Ende 310
- 314: zweite Langlöcher
- 320: zweiter Einsatz
- 321: erstes Ende 320
- 322: zweites Ende 320
- 323: Gewinde
- 324: dritte Ausnehmung
- 330: Bolzen / Stange
- 331: erstes Ende Bolzen
- 332: zweites Ende Bolzen
- 340: Adapter
- 350: Mutter
- 360: Einsatz

## Patentansprüche

1. Windenergieanlagen-Rotorblatt (200), mit
einer Längsrichtung (L),
mindestens einem ersten Rotorblattabschnitt (210) mit einer ersten Stirnseite (212),
mindestens einem zweiten Rotorblattabschnitt (220) mit einer zweiten Stirnseite (222),
einer Trennstelle (200a) zwischen dem ersten und zweiten Rotorblattabschnitt (210, 220),
wobei die erste und zweite Stirnseite (212, 222) an der Trennstelle (200a) aneinander anliegen,
wobei an der ersten Stirnseite (212) eine Mehrzahl von ersten Ausnehmungen (213) und an der zweiten Stirnseite (222) eine Mehrzahl von zweiten Ausnehmungen (223) vorgesehen ist, und
einer Befestigungseinheit (300), welche dazu ausgestaltet ist, den ersten und zweiten Rotorblattabschnitt (210, 220) an der Trennstelle (200a) aneinander zu befestigen,
wobei die Befestigungseinheit (300) eine Mehrzahl von ersten Einsätzen (310) aus Metall aufweist, welche in den ersten Ausnehmungen (213) angeordnet sind und eine Mehrzahl von zweiten Einsätzen (320) aus Metall aufweisen, welche in den zweiten Ausnehmungen (223) angeordnet sind,
wobei die ersten Einsätze (310) jeweils ein erstes Ende (311) und ein zweites Ende (312) aufweisen,
wobei die zweiten Einsätze (320) jeweils ein erstes Ende (321) und ein zweites Ende (322) aufweisen,
wobei die ersten Enden (311, 321) der ersten und zweiten Einsätze (310, 320) jeweils an der Trennstelle (200a) angeordnet sind,
wobei die Befestigungseinheit (300) eine Mehrzahl von Spanneinheiten (330) aufweist, welche dazu geeignet sind, erste und zweite Einsätze (310, 320) gegeneinander zu verspannen, wobei die jeweiligen ersten Enden (311, 321) der ersten und zweiten Einsätze (310, 320) im verspannten Zustand aneinander anliegen oder einander umgeben und gegeneinander verspannt sind,
wobei die Spanneinheiten (330) als Bolzen oder Gewindestangen ausgestaltet sind,
wobei erste Enden (331) der Spanneinheiten (330) jeweils in oder an dem zweiten Einsatz (320) befestigt sind,
wobei zweite Enden (332) der Spanneinheiten (330) jeweils in dem ersten Einsatz (310) befestigt sind,
wobei zwischen den zweiten Enden (332) der Spanneinheit (330) und dem ersten Einsatz (310) ein Adapter (340) angeordnet ist,
wobei die zweiten Enden (3312 der Spanneinheiten (330) jeweils mittels einer Mutter (350) in oder an dem ersten Einsatz (310) befestigt sind und mittels der Mutter (350) eine Vorspannung zwischen den ersten Enden (311, 321) des ersten und zweiten Einsatzes (310, 320) vorgesehen wird,
mit einer Mehrzahl von Langlöchern/Ausnehmungen (214, 314) in dem ersten und zweiten Rotorblattabschnitt (210, 220), wobei die Enden der Spanneinheit (330) sich zumindest teilweise in die Langlöcher (214, 314) erstrecken.

2. Windenergieanlagen-Rotorblatt (200) nach Anspruch 1, wobei
der erste Rotorblattabschnitt (210) eine Mehrzahl von Langlöchern (214) aufweist,
wobei die zweiten Enden (332) der Spanneinheit (330) sich zumindest teilweise in die Langlöcher (214) erstrecken.

3. Windenergieanlagen-Rotorblatt (200) nach Anspruch 1, wobei
die Langlöcher (214, 314) in Umfangsrichtung wechselseitig in dem ersten und zweiten Rotorblattabschnitt (210, 220) vorgesehen sind, wobei die Enden der Spanneinheit (330) sich zumindest teilweise in die Langlöcher (214, 314) erstrecken.

4. Windenergieanlage (100), mit
mindestens einem Windenergieanlagen-Rotorblatt nach einem der Ansprüche 1 bis 3.

## Claims

1. A wind turbine rotor blade (200), with
a longitudinal direction (L),
at least one first rotor blade section (210) with a first front side (212),
at least one second rotor blade section (220) with a second front side (222),
a separation point (200a) between the first and second rotor blade sections (210, 220),
wherein the first and second front sides (212, 222) abut against each other at the separation point (200a),
wherein the first front side (212) has a plurality of first recesses (213), and the second front side (222) has a plurality of second recesses (223), and
a fastening unit (300), which is designed to fasten the first and second rotor blade sections (210, 220) to each other at the separation point (200a),
wherein the fastening unit (300) has a plurality of first inserts (310) made out of metal, which are arranged in the first recesses (213), and a plurality of second inserts (320) made out of metal, which are arranged in the second recesses (223),
wherein the first inserts (310) each have a first end (311) and a second end (312),
wherein the second inserts (320) each have a first end (321) and a second end (322),
wherein the first ends (311, 321) of the first and second inserts (310, 320) are each arranged at the separation point (200a),
wherein the fastening unit (300) has a plurality of clamping units (330), which are suitable for bracing the first and second inserts (310, 320) against each other, wherein the respective first ends (311, 321) of the first and second inserts (310, 320) abut against each another or surround each other and are braced against each other in the braced state, wherein
the clamping units (330) are designed as bolts or threaded rods,
wherein first ends (331) of the clamping units (330) are each fastened in or on the second insert (320),
wherein second ends (332) of the clamping units (330) are each fastened in the first insert (310),
wherein an adapter (340) is arranged between the second ends (332) of the clamping unit (330) and the first insert (310),
wherein the second ends (331) of the clamping units (330) are each fastened in or on the first insert (310) by means of a nut (350), and a pretensioning is provided between the first ends (311, 321) of the first and second inserts (310, 320) by means of the nut (350),and
a plurality of oblong holes/recesses (214, 314) in the first and second rotor blade sections (210, 220), wherein the ends of the clamping unit (330) extend at least partially into the oblong holes (214, 314).

2. The wind turbine rotor blade (200) according to claim 1, wherein
the first rotor blade section (210) has a plurality of oblong holes (214),
wherein the second ends (332) of the clamping unit (330) extend at least partially into the oblong holes (214).

3. The wind turbine rotor blade (200) according to claim 1, wherein
the oblong holes (214, 314) are alternatingly provided in the circumferential direction in the first and second rotor blade sections (210, 220), wherein the ends of the clamping unit (330) extend at least partially into the oblong holes (214, 314).

4. A wind turbine (100), with
at least one wind turbine rotor blade according to one of claims 1 to 3.

## Revendications

1. Pale de rotor d'éolienne (200), avec
un sens longitudinal (L),
au moins un premier tronçon de pale de rotor (210) avec un premier côté frontal (212),
au moins un deuxième tronçon de pale de rotor (220) avec un deuxième côté frontal (222),
un point de séparation (200a) entre le premier et le deuxième tronçon de pale de rotor (210, 220),
dans laquelle le premier et le deuxième côté frontal (212, 222) reposent l'un sur l'autre sur le point de séparation (200a),
dans laquelle une multitude de premiers évidements (213) est prévue sur le premier côté frontal (212) et une multitude de deuxièmes évidements (223) est prévue sur le deuxième côté frontal (222), et
une unité de fixation (300), laquelle est configurée pour fixer l'un sur l'autre le premier et le deuxième tronçon de pale de rotor (210, 220) sur le point de séparation (200a),
dans laquelle l'unité de fixation (300) présente une multitude de premiers inserts (310) en métal, lesquels sont disposés dans les premiers évidements (213), et une multitude de deuxièmes inserts (320) en métal, lesquels sont disposés dans les deuxièmes évidements (223),
dans laquelle les premiers inserts (310) présentent respectivement une première extrémité (311) et une deuxième extrémité (312),
dans laquelle les deuxièmes inserts (320) présentent respectivement une première extrémité (321) et une deuxième extrémité (322),
dans laquelle les premières extrémités (311, 321) des premiers et deuxièmes inserts (310, 320) sont disposées respectivement sur le point de séparation (200a),
dans laquelle l'unité de fixation (300) présente une multitude d'unités de serrage (330), lesquelles sont adaptées pour assembler par serrage mutuellement des premiers et des deuxièmes inserts (310, 320), dans laquelle les premières extrémités (311, 321) respectives des premiers et deuxièmes inserts (310, 320) reposent les unes sur les autres dans l'état assemblé par serrage ou sont entourées mutuellement et sont assemblées par serrage mutuellement,
dans laquelle les unités de serrage (330) sont configurées en tant que boulons ou tiges filetées,
dans laquelle des premières extrémités (331) des unités de serrage (330) sont fixées respectivement dans ou sur le deuxième insert (320),
dans laquelle des deuxièmes extrémités (332) des unités de serrage (330) sont fixées respectivement dans le premier insert (310),
dans laquelle un adaptateur (340) est disposé entre les deuxièmes extrémités (332) de l'unité de serrage (330) et le premier insert (310),
dans laquelle les deuxièmes extrémités (331) des unités de serrage (330) sont fixées respectivement au moyen d'un écrou (350) dans ou sur le premier insert (310) et une précontrainte entre les premières extrémités (311, 321) du premier et du deuxième insert (310, 320) est prévue au moyen de l'écrou (350),
avec une multitude de trous oblongs/d'évidements (214, 314) dans le premier et le deuxième tronçon de pale de rotor (210, 220), dans laquelle les extrémités de l'unité de serrage (330) s'étendent au moins en partie dans les trous oblongs (214, 314).

2. Pale de rotor d'éolienne (200) selon la revendication 1, dans laquelle
le premier tronçon de pale de rotor (210) présente une multitude de trous oblongs (214),
dans laquelle les deuxièmes extrémités (332) de l'unité de serrage (330) s'étendent au moins en partie dans les trous oblongs (214).

3. Pale de rotor d'éolienne (200) selon la revendication 1, dans laquelle
les trous oblongs (214, 314) sont prévus dans la direction périphérique en alternance dans le premier et le deuxième tronçon de pale de rotor (210, 220), dans laquelle les extrémités de l'unité de serrage (330) s'étendent au moins en partie dans les trous oblongs (214, 314).

4. Eolienne (100) avec
au moins une pale de rotor d'éolienne selon l'une quelconque des revendications 1 à 3.
